# EUROPEAN PATENT SPECIFICATION

(11) **EP 2 693 814 B1**
(45) Date of publication and mention of the grant of the patent: **01.03.2017**
(21) Application number: 12360055.3
(22) Date of filing: 03.08.2012
(51) Int. Cl.: H04W 52/32, H04B 7/04, H04L 5/00, H04W 52/14

(54) **Multiple input multiple output (mimo) pilot transmission power**
Pilotübertragungsleistung mit mehreren Eingangs- und Ausgangsgrößen (MIMO)
Puissance de transmission pilote d'entrée multiple et sortie multiple (MIMO)

(43) Date of publication of application: 05.02.2014
(60) Divisional application: 14186201.1
(73) Proprietor: ALCATEL LUCENT, 92100 Boulogne-Billancourt (FR)
(72) Inventor: Wong, Shin Horng, Chippenham, Wiltshire SN15 3YB (GB); Baker, Matthew P J, Canterbury, Kent CT2 9DB (GB)
(74) Representative: Sarup, David Alexander

(56) References cited:
- WO-A1-2007/022630
- WO-A2-2008/024064
- WO-A2-2011/014026
- US-A1- 2011 134 850

## Description

### FIELD OF THE INVENTION

The present invention relates to a method of adapting antenna pilot transmission power of an antenna provided in a multiple input multiple output (MIMO) wireless communication network; the pilot comprising: a common pilot transmittable at all times having a first transmission power; a scheduled pilot transmittable when the antenna is transmitting user data, the scheduled pilot having a second transmission power; a computer program product and network control node operable to perform the method.

### BACKGROUND

Wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station. In a high-speed packet access (HSPA) telecommunications network, data and information is sent between user equipment and a base station in data packets on a radio frequency carrier.

Multiple-Input, Multiple-Output (MIMO) techniques may be employed within a communications system to improve data throughput in communications between, for example, a base station and user equipment.

It will be appreciated that a signal transmitted between user equipment and a base station over a radio channel typically experiences many propagation paths, for example, due to reflection, before arriving at a base station receiver. The signals carried on those paths each arrive at a different time, power and phase at the receiver.

Multiple-Input, Multiple-Output (MIMO) techniques include the use of multiple transmission antenna at user equipment or a base station. Those antenna are physically separated. A signal may be sent to a base station or user equipment on one or more of those antenna(s) provided at a transmitting node. The signals arriving at a base station or user equipment from the multiple antennas provided at a transmitter may, assuming the received signals are not too closely correlated, be decoded by the receiving node and can thus result in an increase in data throughput.

Implementation of MIMO techniques across a network is not without complication.

Accordingly, it is desired to improve the operation of a wireless telecommunications network having MIMO capability.

WO2007/022630 discloses a method and system for multiple zone partitioning. Data and pilot signals are inserted into orthogonal frequency division multiplexing (OFDM) frames having a time domain and a frequency domain. There are common pilot symbols inserted with data into a zone of one type and dedicated pilot signals that are pre coded and only decodable by certain receivers inserted with data into a zone of a different type. The power of the pilot symbols is transmitted with a constant proportional power level to that of the data symbols in the respective zones.

WO2011/014026 also discloses the pilot power to be selected in dependence upon the power of the data, such that there is a predefined ratio of the two.

### SUMMARY

The invention is disclosed according to the independent claims.

Dependent claims disclose further embodiments.

A first aspect provides a method of adapting antenna pilot transmission power of an antenna provided in a multiple input multiple output (MIMO) wireless communication network; said pilot comprising: a common pilot transmittable at all times having a first transmission power; a scheduled pilot transmittable when said antenna is transmitting user data, said scheduled pilot having a second transmission power; said method comprising: determining whether said antenna is transmitting user data; adapting at least one of said common pilot transmission power and said scheduled pilot transmission power in dependence upon whether another pilot signal is transmitted by said antenna by: selecting a transmission power for said common pilot and a transmission power for said scheduled pilot by setting said first and second transmission power such that a sum of said first and second transmission power is sufficient for demodulation of said user data; and adapting at least one of said first and second transmission power in accordance with said selection.

It is possible to provide a four branch downlink MIMO implementation. According to such an implementation, four transmission antennas are provided at a base station, for example, a the Node-B (NB) which are operable to allow a network to transmit up to four transport blocks to user equipment. Those transport blocks are sent by the base station using the same frequency, time and code resources, but have sufficient spatial diversity as a result of the four transmission antennas to allow user equipment to be operable to decode the signals and successfully receive each of the four transport blocks.

In order for user equipment to be operable to decode transport blocks transmitted using 4 branch MIMO techniques, it is operable to perform channel estimations in respect of a radio propagation channel utilized by each of the four antennas. In addition to performing such channel estimates, the user equipment is operable to evaluate quality of downlink radio condition, typically referred to as a Channel Quality Index (CQI), and provide Precoding Control Indication (PCI) information to a base station. The functions of channel estimation, CQI and PCI require a pilot signal to be sent from the base station on each of the four antennas.

In a 2x2 MIMO arrangement, two "common" pilots, known as a primary and secondary common pilots, are transmitted from a base station. Common pilots are transmitted continuously by a base station and are implemented such that they consume a fixed proportion of available transmission resource. For example, a primary common pilot may consume 10% of total transmission power. A secondary common pilot may consume further resources , for example, transmission power, which leaves remaining resource for transmission of actual user data.

In a 4-branch MIMO, it will be appreciated that, compared to the 2 branch MIMO implementation described above, two additional pilot signals are required to allow user equipment to provide necessary information for transmissions made using the third and fourth antennas to be supported. Extension of the number of "common" pilots to support a 4-branch MIMO implementation results in significant resource use by a base station, and a significant portion of transmission power would be used to transmit common pilot signals rather than to transmit user data. Furthermore, such additional common pilots would be seen as interference by legacy user equipment. In order to mitigate such problems it is possible to send the additional common pilots at a lower transmission power than the transmission power allocated to either of the primary or secondary common pilot signals.

As described above, the user equipment is operable to receive pilot signals and provide information to allow estimations to be made of CQI and PCI. User equipment also requires a pilot signal from each antenna in order to be able to demodulate received packets. In a 4-branch MIMO arrangement, transmission of common pilots for the third and fourth antennas occurs at a lower power than the transmission of primary and secondary common pilots, and it will be appreciated that a pilot sent at a lower transmission power may not be sufficient for demodulation purposes.

The first aspect recognises that it is possible to provide a method which allows a system to operate such that pilot signal strength for successful operation of additional antennas required to take advantage of MIMO techniques is sufficient for demodulation purposes. Such a method aims to provide an improvement to resource used by a base station in support of necessary pilot signaling and to mitigate a degree of interference caused to legacy user equipment, whilst taking into account that a common pilot may already be transmitted by an antenna to support CQI and PCI estimation.

Scheduled pilots are defined such that they are sent whenever there is data, for example, on a HS-PDSCH, to be sent to user equipment supporting 4-branch MIMO. Such scheduled pilots are not pre-coded and can be used by all user equipment scheduled in a given transmit time interval. User equipment is operable to use the scheduled pilot transmitted by a given antenna for demodulation and the common pilot transmitted by that given antenna for CQI/PCI estimation.

It well, however, be appreciated that a common pilot transmitted by an antenna for which there is also a scheduled pilot being transmitted may become redundant since the scheduled pilot can itself be used for CQI and PCI estimation. Such duplication of resource use results in an overall waste of available resource since, by design, the common pilots are transmitted at all times.

The first aspect allows transmission power of a common pilot signal and/or a scheduled pilot transmitted by an antenna to be adapted in dependence upon whether another pilot signal, for example, a scheduled pilot, is transmitted by that antenna. By adjusting transmission powers it is possible to minimise waste of transmission power resource and minimise interference caused to use equipment in a network, whilst maintaining full functionality supplied by the provision of a pilot transmission.

Selecting comprises setting the first and second transmission power such that the sum of the first and second transmission power is sufficient for demodulation of the user data. Accordingly, it may be possible for user equipment to use a combined pilot transmission to make appropriate estimations for demodulation and PCI/CQI estimation.

In one embodiment, selecting comprises boosting the first transmission power. In one embodiment, selecting comprises reducing one of the first and second transmission power. In one embodiment, selecting comprises setting one of the first and second transmission power to zero. It will be appreciated that a scheduled pilot is typically transmitted at a higher power than a common pilot since the primary purpose of a scheduled pilot is in support of a data transmission and it is intended to be used for demodulation purposes. The transmission power of a scheduled pilot is therefore typically sufficient for CQI/PCI estimations. In some embodiments, it is possible for a common pilot to be boosted when there is data to be transmitted from an antenna, in such embodiments a scheduled pilot may not be transmitted since the common pilot transmission power may be sufficiently boosted to allow the common pilot to be used for demodulation and CQI/PCI estimations.

In one embodiment, the antenna comprises an antenna supporting non-primary transmission. It will be appreciated that any antenna which is used in MIMO operation may be operable to perform the method of the first aspect, but that the method may be particularly relevant where an antenna is operable to transmit more than one pilot and that those transmissions are not optimised to ensure minimal overall waste of transmission power resource. In one embodiment, the antenna comprises an antenna supporting non-primary pilot transmission.

In one embodiment, the method further comprises informing multiple input multiple output capable receivers of the selection. Accordingly it will be appreciated that if the transmission power of one or more common pilot is changed, it may be beneficial to inform user equipment of such changes so that appropriate configuration changes can be made in support of CQI/PCI estimation processes. Detection for the presence of common pilot may be performed by user equipment. However such detection processes may be prone to error, for example, due to false detection.

In one embodiment, the multiple input multiple output capable receivers are assigned a common identifier and informing comprises transmitting an indicator to receivers assigned the common identifier. According to one embodiment, user equipment within a cell may be allocated a common identifier, for example, a common H-RNTI ID (a HS-DSCH Radio Network Transaction Identifier is allocated by a controlling RNC upon user equipment establishing a HS-DSCH channel and a common such identifier can be used), that identifier, for example being unique within a cell carrying a high speed data shared channel (HS-DSCH). The common identifier can be used to mask a cyclic redundancy check for a network control message, for example, an HS-SCCH order, and user equipment operable to detect such a common control message may be operable to use the common identifier, for example, common H-RNTI, instead of their usual unique identifier, for example, dedicated H-RNTI, for a cyclic redundancy check (CRC). Such a scheme may allow user equipment that are not scheduled for data transmissions on a downlink channel, for example, a HS-PDSCH, in a transmit time interval to either: use scheduled pilots, in a scenario in which common pilot transmission power has been reduced; or take note of an increased common pilot power in a scenario in which common pilot transmission power has been increased, when operating to estimate for CQI/PCI. It will be appreciated that a common identifier, for example, common H-RNTI, may already be implemented in some modes of operation of a network, for example, CELL_FACH modes, and thus may implemented in other modes of operation, for example, CELL_DCH.

In one embodiment, informing comprises broadcasting an indicator to receivers, the indicator being broadcast according to coding associated with multiple input multiple output capable receivers. In some embodiments, a predetermined channelization code can be used to carry a network control order, for example, a HS-SCCH order, which notifies user equipment of a change to common pilot power. According to such an embodiment, there may be no need for a common identifier for user equipment within a cell, for example, a common H-RNTI ID, and a CRC is not masked with any user equipment identifier. User equipment which detects a network control order, for example, HS-SCCH order, which uses the predetermined channelization code, may be operable to perform a CRC check without masking its unique identifier. The predetermined channelization code may be signalled to user equipment by RRC signalling.

In one embodiment, informing comprises transmitting a layer one message indicative of the selection. In one embodiment, the layer one message comprises an HS-SCCH order. Use of layer one signalling means that fast changes to user equipment operation can be implemented, thus allowing for minimised wasted system resource.

A second aspect provides a computer program product operable, when executed on a computer, to perform the method of the first aspect.

A third aspect provides a network control node operable to adapt antenna pilot transmission power of an antenna provided in a multiple input multiple output (MIMO) wireless communication network; said pilot comprising: a common pilot transmittable at all times having a first transmission power; a scheduled pilot transmittable when said antenna is transmitting user data, said scheduled pilot having a second transmission power; said network control node comprising: determination logic operable to determine whether said antenna is transmitting user data; selection logic operable to select a transmission power for said common pilot and said scheduled pilot such that a sum of said first and second transmission power is sufficient for demodulation of said user data; and adaptation logic operable to adapt at least one of said common pilot transmission power and said scheduled pilot transmission power in dependence upon whether another pilot signal is transmitted by said antenna by adapting at least one of said first and second transmission power in accordance with said selection.

In one embodiment, the selection logic is operable to boost the first transmission power.

In one embodiment, the selection logic is operable to reduce one of the first and second transmission power.

In one embodiment, the selection logic is operable to set one of the first and second transmission power to zero.

In one embodiment, the antenna comprises an antenna supporting non-primary transmission. In one embodiment, the antenna comprises an antenna supporting transmission of a non-primary pilot.

In one embodiment, the network control node comprises communication logic operable to inform multiple input multiple output (MIMO) capable receivers of the selection.

In one embodiment, the multiple input multiple output capable receivers are assigned a common identifier and informing comprises transmitting an indicator to receivers assigned the common identifier.

In one embodiment, the communication logic is operable to broadcast an indicator to receivers, the indicator being broadcast according to coding associated with multiple input multiple output capable receivers.

In one embodiment, the communication logic is operable to transmit a layer one message indicative of the selection.

In one embodiment, the layer one message comprises an HS-SCCH order.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically main components of a wireless communication system according to one embodiment;
Figure 2 illustrates schematically multipath propagation;
Figure 3 illustrates schematically pilot power transmission variation of a 4-branch downlink MIMO implementation according to one embodiment; and
Figure 4 illustrates schematically pilot power transmission variation of a 4-branch downlink MIMO implementation according to one embodiment.

### DESCRIPTION OF THE EMBODIMENTS

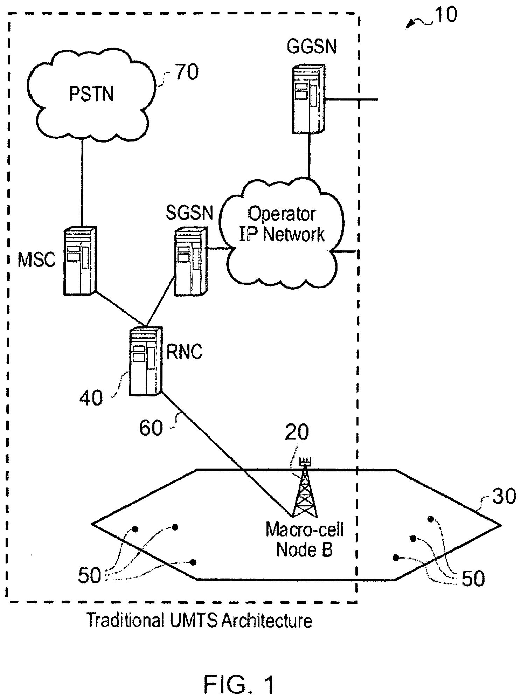

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as, for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

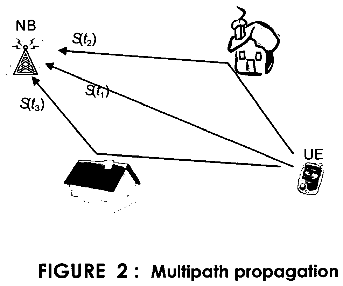

Figure 2 illustrates schematically typical propagation paths between a transmitter, in this case, user equipment 50, and a receiver on a base station 20. A signal transmitted over a radio channel typically experiences many propagation paths, for example, due to reflection, before arriving at a receiver. Those signal paths are represented as *S*(*t*₁)*, S*(*t*₂), and *S*(*t*₃) in Figure 2, and each arrive at different time, power and phase at the receiver.

According to MIMO techniques, streams of data can be transmitted from a transmitter on two or more antennas using the same uplink resource (frequency time and code) and provided those streams are sufficiently uncorrelated, they can be decoded at a receiver. MIMO techniques allow for improved data throughput between user equipment and a base station within a communications network.

It is possible to provide a four branch downlink MIMO implementation. According to such an implementation, four transmission antennas are provided at a base station, for example, a the Node-B (NB) which are operable to allow a network to transmit up to four transport blocks to user equipment. Those transport blocks are sent by the base station using the same frequency, time and code resources, but have sufficient spatial diversity as a result of the four transmission antennas to allow user equipment to be operable to decode the signals and successfully receive each of the four transport blocks.

In order for user equipment to be operable to decode transport blocks transmitted using 4 branch MIMO techniques, it is operable to perform channel estimations in respect of a radio propagation channel utilized by each of the four antennas. In addition to performing such channel estimates, the user equipment is operable to evaluate quality of downlink radio condition, typically referred to as a Channel Quality Index (CQI), and provide Precoding Control Indication (PCI) information to a base station. The functions of channel estimation, CQI and PCI require a pilot signal to be sent from the base station on each of the four antennas.

In a 2x2 MIMO arrangement, two "common" pilots, known as a primary and secondary common pilots, are transmitted from a base station. Common pilots are transmitted continuously by a base station and are implemented such that they consume a fixed proportion of available transmission resource. For example, a primary common pilot may consume 10% of total transmission power. A secondary common pilot may consume further resources , for example, transmission power, which leaves remaining resource for transmission of actual user data.

In a 4-branch MIMO, it will be appreciated that, compared to the 2 branch MIMO implementation described above, two additional pilot signals are required to allow user equipment to provide necessary information for transmissions made using the third and fourth antennas to be supported. Extension of the number of "common" pilots to support a 4-branch MIMO implementation results in significant resource use by a base station, and a significant portion of transmission power would be used to transmit common pilot signals rather than to transmit user data. Furthermore, such additional common pilots would be seen as interference by legacy user equipment. In order to mitigate such problems it is possible to send the additional common pilots at a lower transmission power than the transmission power allocated to either of the primary or secondary common pilot signals.

As described above, the user equipment is operable to receive pilot signals and provide information to allow estimations to be made of CQI and PCI. User equipment also requires a pilot signal from each antenna in order to be able to demodulate received packets. In a 4-branch MIMO arrangement, transmission of common pilots for the third and fourth antennas occurs at a lower power than the transmission of primary and secondary common pilots, and it will be appreciated that a pilot sent at a lower transmission power may not be sufficient for demodulation purposes.

It is possible to address such a shortfall in pilot transmission power by arranging for a base station to be operable to transmit an additional "scheduled pilot" from the third and fourth antennas whenever data is transmitted. That scheduled pilot is transmitted at a power sufficient for demodulation to be carried out by user equipment. Such a process results in two pilots, a common pilot and a scheduled pilot, being transmitted by the third and/or fourth antenna whenever data is transmitted. Transmission of two pilots on an antenna results in additional resource overhead to support appropriate pilot signals.

Aspects and embodiments described aim to provide a method which allows a system to operate such that pilot signal strength for successful operation of additional antennas required to take advantage of MIMO techniques is sufficient for demodulation purposes. Such a method aims to provide an improvement to resource used by a base station in support of necessary pilot signaling and to mitigate a degree of interference caused to legacy user equipment, whilst taking into account that a common pilot may already be transmitted by an antenna to support CQI and PCI estimation.

Scheduled pilots have been defined in 3GPP standards for 4-branch MIMO implementation. Scheduled pilots are defined such that they are sent whenever there is data, for example, on a HS-PDSCH, to be sent to user equipment supporting 4-branch MIMO. Such scheduled pilots are not pre-coded and can be used by all user equipment scheduled in a given transmit time interval. User equipment is operable to use the scheduled pilot transmitted by a given antenna for demodulation and the common pilot transmitted by that given antenna for CQI/PCI estimation.

It will, however, be appreciated that a common pilot transmitted by an antenna for which there is also a scheduled pilot being transmitted may become redundant since the scheduled pilot can itself be used for CQI and PCI estimation. Such duplication of resource use results in an overall waste of available resource since, by design, the common pilots are transmitted at all times.

### Overview

Before discussing the embodiments in any more detail, first an overview will be provided. Aspects and embodiments described allow transmission power of a common pilot signal transmitted by an antenna to be adapted in dependence upon whether another pilot signal, for example, a scheduled pilot, is transmitted by that antenna.

According to one embodiment, a common pilot signal may be transmitted on one or more of the third and fourth antennas provided in a 4-branch MIMO system. A second pilot signal, for example, a scheduled pilot signal may be transmitted on the third or fourth antenna only when data is scheduled to be transmitted to 4-branch MIMO compatible user equipment. When data is scheduled for transmission to 4-branch compatible MIMO user equipment, for example, when data is transmitted using on a HS-PDSCH, transmission of a scheduled pilot is transmitted and, in accordance with one embodiment, the transmission power of a common pilot being transmitted by an antenna may be adjusted such that the total pilot power (common pilot and scheduled pilot transmitted by an antenna) does not exceed a power determined to be required for successful use of a pilot signal to perform both demodulation and CQI/PCI estimations.

In some embodiments the adjustment of transmission power of a common pilot signal may comprise reducing the transmission power to substantially zero. That is to say, if a scheduled pilot is being transmitted, no common pilot may be transmitted by a given antenna. In other words, in some embodiments, the transmission power of common pilot signals transmitted by antennas are reduced to zero (mW) whenever data channels, for example, HS-PDSCH, having associated scheduled pilots are transmitted. It will be appreciated that a scheduled pilot is typically transmitted at a higher power than a common pilot since the primary purpose of a scheduled pilot is in support of a data transmission and it is intended to be used for demodulation purposes. The transmission power of a scheduled pilot is therefore typically sufficient for CQI/PCI estimations.

In one embodiment, common pilot transmission power of pilots sent on, for example the third and fourth antenna of a 4-branch MIMO implementation, is increased to a level required for demodulation to occur at 4-branch MIMO compatible user equipment whenever data is sent, for example on a HS-PDSCH. In some such embodiments, a scheduled pilot may not be transmitted since the common pilot transmission power may be sufficiently boosted to allow the common pilot to be used for demodulation and CQI/PCI estimations.

If the transmission power of one or more common pilot is changed, it may be beneficial to inform user equipment of such changes so that appropriate configuration changes can be made in support of CQI/PCI estimation processes. Detection for the presence of common pilot may be performed by user equipment. However such detection processes may be prone to error, for example, due to false detection. In some embodiments, a network control message, for example, an HS-SCCH order, may be used to notify user equipment configured to operate in 4-branch MIMO mode of a change to third and fourth antenna common pilot transmission power.

According to one embodiment, user equipment within a cell may be allocated a common identifier, for example, a common H-RNTI ID (a HS-DSCH Radio Network Transaction Identifier is allocated by a controlling RNC upon user equipment establishing a HS-DSCH channel and a common such identifier can be used), that identifier, for example being unique within a cell carrying a high speed data shared channel (HS-DSCH). The common identifier can be used to mask a cyclic redundancy check for a network control message, for example, an HS-SCCH order, and user equipment operable to detect such a common control message may be operable to use the common identifier, for example, common H-RNTI, instead of their usual unique identifier, for example, dedicated H-RNTI, for a cyclic redundancy check (CRC). Such a scheme may allow user equipment that are not scheduled for data transmissions on a downlink channel, for example, a HS-PDSCH, in a transmit time interval to either: use scheduled pilots, in a scenario in which common pilot transmission power has been reduced; or take note of an increased common pilot power in a scenario in which common pilot transmission power has been increased, when operating to estimate for CQI/PCI. It will be appreciated that a common identifier, for example, common H-RNTI, may already be implemented in some modes of operation of a network, for example, CELL_FACH modes, and thus may implemented in other modes of operation, for example, CELL_DCH.

In some embodiments, a predetermined channelization code can be used to carry a network control order, for example, a HS-SCCH order, which notifies user equipment of a change to common pilot power. According to such an embodiment, there may be no need for a common identifier for user equipment within a cell, for example, a common H-RNTI ID, and a CRC is not masked with any user equipment identifier. User equipment which detects a network control order, for example, HS-SCCH order, which uses the predetermined channelization code, may be operable to perform a CRC check without masking its unique identifier. The predetermined channelization code may be signalled to user equipment by RRC signalling.

In some embodiments, a signal or message is transmitted to relevant user equipment whenever transmission power of a common pilot signal is changed, to indicate the change. The signal or message may also indicate that a different pilot signal, for example, a scheduled pilot, is available. Such a signal or message may be broadcast to user equipment using the concept of a common identity within cell and/or a known code to identify a signal or message as being of a particular type associated with a change to a pilot signal.

### Example 1

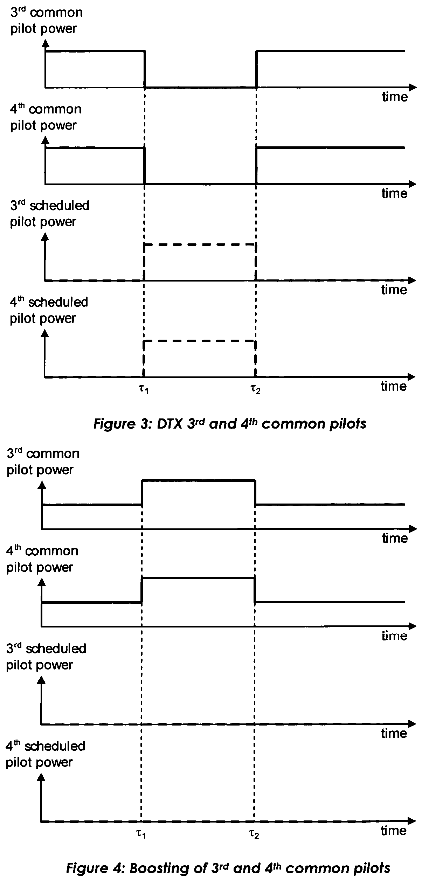

Figure 3 illustrates schematically pilot power transmission variation of a 4-branch downlink MIMO implementation according to one embodiment. Figure 3 illustrates schematically transmission power of a third antenna common pilot, transmission power of a fourth antenna common pilot, transmission power of a scheduled pilot for the third antenna and transmission power of a scheduled pilot for the fourth antenna. The scheduled pilots for the third and fourth antenna are typically referred to as the third scheduled pilot and fourth scheduled pilot respectively.

In a cell there may be four user equipment, namely UE1, UE2, UE3 and UE4, each configured for 4-branch MIMO operations. In addition each being allocated a unique H-RNTI, these MIMO compatible user equipment are also allocated, by the network, a common H-RNTI, which functions to allow the user equipment to decode common HS-SCCH orders.

As shown in Figure 3, at time τ₁ a base station supporting the four user equipment is operable to send downlink packets (HS-PDSCH) using a rank > 1 to UE1 and UE2. UE1 and UE2 are operable to detect layer one orders, for example, HS-SCCH, intended for them. That order, for example, HS-SCCH, to each of user equipment UE1 and UE2 gives UE1 and UE2 demodulation information and also the rank of the transmission for each respective user equipment. The base station is also operable to send 3^{rd} and 4^{th} scheduled pilots when there are downlink packets to send, so that UE1 and UE2 are able to demodulate the message. In the scenario illustrated in Figure 3 at time, τ₁ the base station is also operable to send a common HS-SCCH order using a common H-RNTI to all user equipment having that common identifier, ie UE1, UE2, UE3 and UE4. That common HS-SCCH order indicates to user equipment having the relevant common identifier that the common pilot transmission power is to be reduced to zero. On receiving the common order (common HS-SCCH order) UE3 and UE4 make necessary reconfigurations to be able to use the scheduled pilots transmitted by the third and fourth antenna for CQI/PCI estimation purposes.

In the scenario illustrated in Figure 3, at time τ₂ the base station ceases transmitting downlink packets to UE1 and UE2. It is operable to then send a common order to inform UE3 and UE4 that scheduled pilot is no longer to be transmitted, and that the 3^{rd} and 4^{th} common pilots are to be transmitted. UE1, UE2, UE3 and UE4 are then operable to each use the 3^{rd} and 4^{th} common pilots for CQI/PCI estimation.

### Example 2

Figure 4 illustrates schematically pilot power transmission variation of a 4-branch downlink MIMO implementation according to one embodiment. In the embodiment shown in Figure 4, scheduled pilots are not used and common pilot transmission power from the third and fourth antenna is boosted when there is data transmission from the third and fourth antenna.

As described in relation to Figure 3, there may be four user equipment within a MIMO downlink capable base station cell configured to operate in 4-branch MIMO mode, namely: UE1, UE2, UE3 and UE4. A channelization code carrying a common HS-SCCH order is, in this embodiment, signaled to those user equipment.

At time τ₁, the base station begins to send data packets, for example, HS-PDSCH packets, to UE1 and UE2 using MIMO techniques. The base station in this example is operable to then increase the transmission power of the 3^{rd} and 4^{th} common pilots to a level sufficient for user equipment to use the common pilots for demodulation purposes. UE1 and UE2 are operable to use the boosted 3^{rd} and 4^{th} common pilots for demodulation and also for estimating CQI/PCI. At time τ₁ the base station is also operable to send a common HS-SCCH order using the previously signaled channelization code and which can be read by UE1, UE2, UE3 and UE4. UE3 and UE4 are thus informed that the 3^{rd} and 4^{th} common pilots have been boosted and reconfigure their operation to take the boosted common pilots into account when performing CQI/PCI estimations. UE1 and UE2 may be operable to ignore the common HS-SCCH order, since they will be aware of the transmission of data, but whether to ignore the common HS-SCCH order can be user equipment implementation based.

At time τ₂, the base station ceases sending data packets, for example, HS-PDSCH packets, using MIMO techniques to UE1 and UE2. The base station is then operable to send an order using the signaled channelization code to inform UE1, UE2, UE3 and UE4 that the 3^{rd} and 4^{th} common pilots are to default to their original transmission power and are no longer boosted to support data transmissions.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope.

## Claims

1. A method of adapting antenna pilot transmission power of an antenna provided in a multiple input multiple output, MIMO wireless communication network; said pilot comprising:
a common pilot transmittable at all times having a first transmission power;
a scheduled pilot transmittable when said antenna is transmitting user data, said scheduled pilot having a second transmission power;
said method comprising:
determining whether said antenna is transmitting user data;
adapting at least one of a transmission power for said common pilot and a transmission power for said scheduled pilot in dependence upon whether another pilot signal is transmitted by said antenna by:
selecting the transmission power for said common pilot and the transmission power for said scheduled pilot by setting said first and second transmission powers such that a sum of said first and second transmission powers is sufficient for demodulation of said user data; and
adapting at least one of said first and second transmission powers in accordance with said selection.

2. A method according to claim 1, wherein said selecting comprises boosting said first transmission power.

3. A method according to claim 2, wherein said selecting comprises reducing said second transmission power.

4. A method according to claim 2 or 3, wherein said selecting comprises setting said second transmission power to zero.

5. A method according to claim 1, wherein said selecting comprises reducing one of said first and second transmission powers.

6. A method according to claim 1 or 5, wherein said selecting comprises setting one of said first and second transmission powers to zero.

7. A method according to any preceding claim, wherein said antenna comprises an antenna supporting non-primary pilot transmission.

8. A method according to any preceding claim, wherein said method further comprises informing multiple input multiple output capable receivers of said selection.

9. A method according to claim 8, wherein said multiple input multiple output capable receivers are assigned a common identifier and said informing comprises transmitting an indicator to receivers assigned said common identifier.

10. A method according to claim 8 or claim 9, wherein said informing comprises broadcasting an indicator to receivers, said indicator being broadcast according coding associated with multiple input multiple output capable receivers.

11. A method according to any one of claims 8 to 10, wherein said informing comprises transmitting a layer one message indicative of said selection.

12. A method according to claim 11, wherein said layer one message comprises an HS-SCCH order.

13. A method according to any preceding claim, wherein the sum represents a total pilot power.

14. A computer program product operable, when executed on a computer, to perform the method of any one of claims 1 to 13.

15. A network control node (20) operable to adapt antenna pilot transmission power of an antenna provided in a multiple input multiple output, MIMO wireless communication network; said pilot comprising:
a common pilot transmittable at all times having a first transmission power;
a scheduled pilot transmittable when said antenna is transmitting user data, said scheduled pilot having a second transmission power;
said network control node comprising:
determination logic operable to determine whether said antenna is transmitting user data;
selection logic operable to select a transmission power for said common pilot and said scheduled pilot by setting said first and second transmission powers such that a sum of said first and second transmission powers is sufficient for demodulation of said user data; and
adaptation logic operable to adapt at least one of a transmission power for said common pilot and a transmission power for said scheduled pilot in dependence upon whether another pilot signal is transmitted by said antenna by adapting at least one of said first and second transmission powers in accordance with said selection.

## Patentansprüche

1. Verfahren zum Anpassen der Antennenpilot-Übertragungsleistung einer Antenne in einem drahtlosen Kommunikationsnetzwerk mit mehreren Eingangs- und Ausgangsgrößen (Multiple Input Multiple Output, MIMO), wobei besagter Pilot umfasst:
einen gemeinsamen Piloten, jederzeit übertragbar und mit einer ersten Übertragungsleistung;
einen eingeplanten Piloten, dann übertragbar, wenn besagte Antenne Benutzerdaten überträgt, wobei besagter eingeplanter Pilot eine zweite Übertragungsleistung hat;
wobei das besagte Verfahren umfasst:
das Bestimmen, ob besagte Antenne Benutzerdaten überträgt;
das Anpassen mindestens entweder einer Übertragungsleistung für besagten gemeinsamen Piloten oder eine Übertragungsleistung für besagten eingeplanten Piloten in Abhängigkeit davon, ob von besagter Antenne ein anderes Pilotsignal übertragen wird,
wobei das Anpassen erfolgt durch:
die Auswahl der Übertragungsleistung für besagten gemeinsamen Piloten und der Übertragungsleistung für besagten eingeplanten Piloten, indem besagte erste und besagte zweite Übertragungsleistung so eingestellt werden, dass eine Summe besagter erster Übertragungsleistung und besagter zweiter Übertragungsleistung ausreicht, um besagte Benutzerdaten zu demodulieren; und
das Anpassen mindestens einer der besagten ersten und der besagten zweiten Übertragungsleistung in Übereinstimmung mit besagter Auswahl.

2. Verfahren nach Anspruch 1, wobei besagte Auswahl das Verstärken besagter erster Übertragungsleistung umfasst.

3. Verfahren nach Anspruch 2, wobei besagte Auswahl das Abschwächen besagter zweiter Übertragungsleistung umfasst.

4. Verfahren nach Anspruch 2 oder 3, wobei besagte Auswahl das Einstellen besagter zweiter Übertragungsleistung auf null umfasst.

5. Verfahren nach Anspruch 1, wobei besagte Auswahl das Abschwächen einer der besagten ersten oder der besagten zweiten Übertragungsleistung umfasst.

6. Verfahren nach Anspruch 1 oder 5, wobei besagte Auswahl das Einstellen entweder der besagten ersten oder der besagten zweiten Übertragungsleistung auf null umfasst.

7. Verfahren nach einem jeglichen der vorgenannten Ansprüche, eine Antenne umfassend, die nichtprimäre Pilotübertragungen unterstützt.

8. Verfahren nach einem jeglichen der vorgenannten Ansprüche, wobei besagtes Verfahren weiterhin umfasst, MIMO-fähige Empfänger über besagte Auswahl zu informieren.

9. Verfahren nach Anspruch 8, wobei den besagten, MIMO-fähigen Empfängern eine gemeinsame Kennung zugewiesen wird und wobei besagtes Informieren das Übertragen eines Indikators an die Empfänger umfasst, denen besagte gemeinsame Kennung zugewiesen wurde.

10. Verfahren nach Anspruch 8 oder 9, wobei besagtes Informieren das Senden eines Indikators an Empfänger umfasst, wobei besagter Indikator gemäß einer Codierung gesendet wird, die mit MIMO-fähigen Empfängern assoziiert ist.

11. Verfahren nach einem jeglichen der Ansprüche 8 bis 10, wobei besagtes Informieren das Übertragen einer Nachricht der Stufe eins umfasst, die besagte Auswahl indiziert.

12. Verfahren nach Anspruch 11, wobei besagte Nachricht der Stufe eins einen HS-SCCH-Befehl umfasst.

13. Verfahren nach einem jeglichen der vorgenannten Ansprüche, wobei die Summe eine Gesamtpilotleistung repräsentiert.

14. Computerprogramm-Produkt, betreibbar für das Durchführen des Verfahrens eines jeglichen der Ansprüche 1 bis 13, wenn es auf einem Computer ausgeführt wird.

15. Netzwerksteuerungsknoten (20), ausgelegt für das Anpassen der Antennenpilot-Übertragungsleistung einer Antenne in einem drahtlosen Kommunikationsnetzwerk mit mehreren Eingangs- und Ausgangsgrößen (Multiple Input Multiple Output, MIMO), wobei besagter Pilot umfasst:
einen gemeinsamen Piloten, jederzeit übertragbar und mit einer ersten Übertragungsleistung;
einen eingeplanten Piloten, dann übertragbar, wenn besagte Antenne Benutzerdaten überträgt, wobei besagter eingeplanter Pilot eine zweite Übertragungsleistung hat;
wobei besagter Netzwerksteuerungsknoten umfasst:
eine Bestimmungslogik, die ausgelegt ist für das Bestimmen, ob besagte Antenne Benutzerdaten überträgt;
eine Auswahllogik, die ausgelegt ist für die Auswahl einer Übertragungsleistung für besagten gemeinsamen Piloten und besagten eingeplanten Piloten, indem besagte erste und besagte zweite Übertragungsleistung so eingestellt werden, dass eine Summe besagter erster Übertragungsleistung und besagter zweiter Übertragungsleistung ausreicht, um besagte Benutzerdaten zu demodulieren; und
eine Anpassungslogik, ausgelegt für das Anpassen mindestens entweder einer Übertragungsleistung für besagten gemeinsamen Piloten oder eine Übertragungsleistung für besagten eingeplanten Piloten in Abhängigkeit davon, ob von besagter Antenne ein anderes Pilotsignal übertragen wird, wobei das Anpassen durch das Anpassen mindestens entweder besagter erster oder besagter zweiter Übertragungsleistung in Übereinstimmung mit besagter Auswahl erfolgt.

## Revendications

1. Procédé d'adaptation de puissance de transmission de pilote d'antenne d'une antenne pourvue dans un réseau de communication sans fil à entrées multiples et sorties multiples, MIMO ; ledit pilote comprenant :
un pilote commun transmissible à tous moments ayant une première puissance de transmission ;
un pilote planifié transmissible lorsque ladite antenne transmet des données d'utilisateur, ledit pilote planifié ayant une seconde puissance de transmission ;
ledit procédé comprenant les étapes suivantes :
déterminer si ladite antenne transmet des données d'utilisateur ;
adapter au moins une d'une puissance de transmission pour ledit pilote commun et d'une puissance de transmission pour ledit pilote planifié en fonction de si un autre signal pilote est transmis par ladite antenne en :
sélectionnant la puissance de transmission pour ledit pilote commun et la puissance de transmission pour ledit pilote planifié en réglant lesdites première et seconde puissances de transmission de sorte qu'une somme desdites première et seconde puissances de transmission soit suffisante pour la démodulation desdites données d'utilisateur ; et
adaptant au moins une desdites première et seconde puissances de transmission conformément à ladite sélection.

2. Procédé selon la revendication 1, dans lequel ladite sélection comprend l'amplification de ladite première puissance de transmission.

3. Procédé selon la revendication 2, dans lequel ladite sélection comprend la réduction de ladite seconde puissance de transmission.

4. Procédé selon la revendication 2 ou 3, dans lequel ladite sélection comprend le réglage de ladite seconde puissance de transmission à zéro.

5. Procédé selon la revendication 1, dans lequel ladite sélection comprend la réduction d'une desdites première et seconde puissances de transmission.

6. Procédé selon la revendication 1 ou 5, dans lequel ladite sélection comprend le réglage d'une desdites première et seconde puissances de transmission à zéro.

7. Procédé selon l'une quelconque des revendications précédentes, dans lequel ladite antenne comprend une antenne supportant une transmission de pilote non primaire.

8. Procédé selon l'une quelconque des revendications précédentes, dans lequel ledit procédé comprend en outre l'information de récepteurs capables d'entrées multiples et de sorties multiples de ladite sélection.

9. Procédé selon la revendication 8, dans lequel lesdites récepteurs capables d'entrées multiples et de sorties multiples se voient assigner un identificateur commun et ladite information comprend la transmission d'un indicateur à des récepteurs qui se sont vus assigner ledit identificateur commun.

10. Procédé selon la revendication 8 ou la revendication 9, dans lequel ladite information comprend la diffusion d'un indicateur à des récepteurs, ledit indicateur étant diffusé selon un codage associé à des récepteurs capables d'entrées multiples et de sorties multiples.

11. Procédé selon l'une quelconque des revendications 8 à 10, dans lequel ladite information comprend la transmission d'un message de couche un indicatif de ladite sélection.

12. Procédé selon la revendication 11, dans lequel ledit message de couche un comprend un ordre HS-SCCH.

13. Procédé selon l'une quelconque des revendications précédentes, dans lequel la somme représente une puissance de pilote totale.

14. Produit de programme informatique exploitable, lorsqu'il est exécuté sur un ordinateur, pour effectuer le procédé de l'une quelconque des revendications 1 à 13.

15. Noeud de contrôle de réseau (20) exploitable pour adapter une puissance de transmission de pilote d'antenne d'une antenne pourvue dans un réseau de communication sans fil à entrées multiples et sorties multiples, MIMO ; ledit pilote comprenant :
un pilote commun transmissible à tous moments ayant une première puissance de transmission ;
un pilote planifié transmissible lorsque ladite antenne transmet des données d'utilisateur, ledit pilote planifié ayant une seconde puissance de transmission ;
ledit noeud de contrôle de réseau comprenant :
une logique de détermination exploitable pour déterminer si ladite antenne transmet des données d'utilisateur ;
une logique de sélection exploitable pour sélectionner une puissance de transmission pour ledit pilote commun et ledit pilote planifié en réglant lesdites première et seconde puissances de transmission de sorte qu'une somme desdites première et seconde
puissances de transmission soit suffisante pour la démodulation desdites données d'utilisateur ; et
une logique d'adaptation exploitable pour adapter au moins une d'une puissance de transmission pour ledit pilote commun et d'une puissance de transmission pour ledit pilote planifié en fonction de si un autre signal pilote est transmis par ladite antenne en adaptant au moins une desdites première et seconde puissances de transmission conformément à ladite sélection.
